# EUROPÄISCHE PATENTSCHRIFT

(11) **EP 1 506 069 B1**
(45) Veröffentlichungstag und Bekanntmachung des Hinweises auf die Patenterteilung: **06.06.2007**
(21) Anmeldenummer: 02772114.1
(22) Anmeldetag: 02.08.2002
(51) Int. Cl.: B23C 5/10

(54) **SCHNEIDPLATTE FÜR EIN BEARBEITUNGSWERKZEUG SOWIE HALTER FÜR EINE DERARTIGE SCHNEIDPLATTE**
CUTTING PLATE FOR A PROCESSING TOOL AND HOLDING DEVICE FOR SUCH A CUTTING PLATE
OUTIL DE COUPE POUR OUTIL D'USINAGE ET SUPPORT POUR UN OUTIL DE COUPE DE CE TYPE

(30) Priorität: 22.05.2002 DE 10222445
(43) Veröffentlichungstag der Anmeldung: 16.02.2005
(73) Patentinhaber: HARTMETALL-WERKZEUGFABRIK PAUL HORN GMBH, 72072 Tübingen (DE)
(72) Erfinder: SCHÄFER, Hans, 72810 Gomaringen (DE); OETTLE, Matthias, 72585 Riederich (DE)
(74) Vertreter: Bartels, Martin Erich Arthur
(86) Internationale Anmeldenummer: PCT/EP2002/008606
(87) Internationale Veröffentlichungsnummer: WO 2003/097281

(56) Entgegenhaltungen:
- WO-A-01/45883
- DE-A- 3 402 547
- DE-A- 19 701 555
- FR-A- 864 432
- US-A- 5 607 263

## Beschreibung

Die Erfindung bezieht sich auf eine Schneidplatte für ein Bearbeitungswerkzeug, insbesondere Fräswerkzeug gemäß der Merkmalsausgestaltung des Oberbegriffes des Patentanspruches 1.

Schneidplatten, die zusammen mit einem schaftartigen Halter, welcher mit einer Antriebsspindel oder mit einem nicht rotierenden Maschinensupport verbindbar ist, der für Zustellbewegungen steuerbar ist, ein rotierendes oder nicht rotierendes Bearbeitungswerkzeug bilden, sind bekannt. Beispielsweise zeigt die DE 34 48 086 C2 ein derartiges Werkzeug für Innenbearbeitung. Solche Werkzeuge finden in großem Umfang für Bearbeitungsvorgänge Verwendung, die mit hoher Genauigkeit durchzuführen sind. Um die Einhaltung entsprechend enger Toleranzen zu gewährleisten, ist es äußerst wesentlich, dass eine strikte Zuordnung zwischen Schneidplattentyp und dem hierzu korrespondierenden Halter eingehalten wird. Mit anderen Worten gesagt, muß darauf geachtet werden, dass an einem betreffenden Halter nur Schneidplatten angebracht werden, deren Körper mit seinem Kupplungsteil präzise an die Geometrie des Sitzes am Halter angepasst ist. Um optimale Arbeitsergebnisse sicherzustellen, hat der Anwender daher sein Augenmerk darauf zu richten, dass mit einem gegebenen Halter lediglich Schneidplatten verwendet werden, die zu einer zugeordneten Typklasse gehören, die entsprechenden Spezifikationen genügt, die vom Hersteller für die Schneidplatte und den Halter vorgesehen sind. Selbst wenn der Anwender hierauf sein Augenmerk richtet, ist nicht auszuschließen, dass irrtümlich Schneidplatten am betreffenden Halter angebracht werden, die für die Benutzung mit diesem Halter nicht vorgesehen sind.

Durch die WO-A-01/45883 ist ein Schneidwerkzeug nebst Halter bekannt, wobei für eine plane stirnseitige Anlage, der Halter eine sich zur Umgebung hin öffnende Werkzeugaufnahme aufweist, die über Heizeinrichtungen beheizt sich im Durchmesser erweiternd, die Aufnahme des Eingriffszapfens des Schneidwerkzeuges ermöglicht, das dann dergestalt mit Abkühlen des Halters und Schrumpfen der Öffnung festgelegt wird. Bei diesem gattungsfremden Werkzeugsystem bei dem die Mitnahme des vorzugsweise halbkugelförmig ausgebildeten Schneidewerkzeuges durch Reibschluß erfolgt, sind für eine zusätzliche Drehmomentübertragung und um ein ungewolltes Lösen der Schneidplatte zu vermeiden, zapfenartige Vorsprünge - auch in Form zusätzlicher Stifte- sowie Ausnehmungen im Schneidwerkzeug nebst korrespondierenden Eingriffs- oder Verriegelungsmitteln auf der Halterseite vorhanden, um dergestalt ein ungewolltes Lösen des Schneidwerkzeuges während der Bearbeitung eines Werkstückes bei hoher Schnittkrafteinleitung zu vermeiden.

Durch die DE-A-34 02 547 ist eine gattungsgemäße Schneidplatte für ein Bearbeitungswerkzeug, insbesondere Fräswerkzeug bekannt, die zumindest eine Schneide aufweist, die an einem zentralen Körper der Schneidplatte radial vorstehend ausgebildet ist, welcher für das Anbringen der Schneidplatte an einem stirnseitigen Sitz eines eine Längsachse definierenden, schaftartigen Halters einen Kupplungsteil aufweist, der mindestens eine Mitnehmerfläche für die Übertragung eines Arbeitsdrehmomentes vom Halter auf die Schneidplatte bildet, und mit einer zur Längsachse konzentrischen Bohrung, die im Körper für eine die Schneidplatte am Sitz des Halters axial sichernde Schraube ausgebildet ist, wobei der Kupplungsteil zumindest drei am Körper axial vorstehende Mitnehmerteile in Form von Rippen aufweist, an denen die Mitnehmerfläche für die Drehmomentübertragung ausgebildet ist und die sich, gleiche Zentriwinkel miteinander einschließend, radial erstrecken und für die Zusammenwirkung mit komplementär ausgebildeten Nuten des Sitzes des Halters vorgesehen sind. Bei dieser bekannten Lösung besteht gleichfalls die Gefahr, dass irrtümlich Schneidplatten am betreffenden Halter angebracht werden, die für die Benutzung mit diesem Halter nicht vorgesehen sind oder dass die Schneidplatte so aufgesetzt wird, dass sie nicht präzise an die Geometrie des Sitzes am Halter angepasst ist.

Zwar ist durch die Abflachungen der Vorsprünge der bekannten Schneidplatte ein Formteil gebildet, welches in Zusammenwirkung mit einer zugeordneten Ausgestaltung am Sitz des Halters eine Art Unverwechselbarkeitseinrichtung bildet; trotz dieser Maßnahme kann aber die Schneidplatte abhängig von der Anzahl der Vorsprünge an der Schneidplatte und den korrespondierenden, den Sitz bildenden Ausnehmungen am Halter in willkürlich zu wählenden Positionen festgelegt werden, was zu den beschriebenen Nachteilen führt.

Der Erfindung liegt die Aufgabe zugrunde, diesbezüglich durch eine Schneidplatte Abhilfe zu schaffen, bei der sichergestellt ist, dass nur eine gewünschte, optimale Kombination zwischen Schneidplatte und Halter gebildet wird.

Bei einer Schneidplatte der eingangs genannten Art ist diese Aufgabe erfindungsgemäß dadurch gelöst, dass als Formteil der Unverwechselbarkeitseinrichtung eine sich am Kupplungsteil in Axialrichtung erstreckende Vertiefung oder eine durch eine Abflachung einer der Rippen gebildete Vertiefung oder eine am Kupplungsteil zwischen zwei Rippen gelegene, sich in Axialrichtung erstreckende Vertiefung vorgesehen ist.

Dadurch ist zwangsmäßig sichergestellt, dass nur Schneidplatten mit einem bestimmten Formteil, welcher für ihre Spezifikation kennzeichnend ist und Teil der Unverwechselbarkeitseinrichtung bildet, an einem gegebenen, zugeordneten Halter anbringbar sind.

Gegenstand der Erfindung ist auch ein Halter für eine erfindungsgemäße Schneidplatte, der eine am Sitz für die Schneidplatte vorgesehene Ausgestaltung aufweist, die in Zusammenwirkung mit einem Formteil am Körper der Schneidplatte eine Unverwechselbarkeitseinrichtung bildet, wobei am Halter zumindest drei zu den Rippen der Schneidplatte komplementär ausgebildete Nuten vorhanden sind, dadurch gekennzeichnet, dass als einen Teil der Unverwechselbarkeitseinrichtung bildende Ausgestaltung ein am Sitz für die Schneidplatte axial vorstehender Vorsprung vorgesehen ist, der sich in die am Kupplungsteil der Schneidplatte ausgebildete Vertiefung erstreckt oder dass als einen Teil der Unverwechselbarkeitseinrichtung bildender Vorsprung ein Stift vorgesehen ist, der sich, zur Längsachse parallel, vom Sitz des Halters axial erstreckt.

Vorzugsweise ist die axiale Höhe des Vorsprunges etwas kleiner als die Tiefe der Vertiefung an der zugeordneten Schneidplatte, so dass der Vorsprung, der beispielsweise die Form eines am Sitz des Halters axial vorstehenden Stiftes besitzt, an seinem äußeren Ende keinen Teil der Anlageflächen zwischen Sitz und Schneidplatte bildet.

Wenn die für den Eingriff des Stiftes am Körper der Schneidplatte vorgesehene Vertiefung die Form einer Sackbohrung besitzt, ist deren Weite vorzugsweise so bemessen, dass sich auch zwischen den Seitenwänden des Stiftes und der Sackbohrung ein Spielraum ergibt, der Stift also in der Sackbohrung ohne Berührung des Körpers der Schneidplatte aufnehmbar ist.

Nachstehend ist die Erfindung anhand von in der Zeichnung dargestellten Ausführungsbeispielen im einzelnen erläutert. Es zeigen:
- Fig. 1 eine perspektivische Ansicht eines Fräswerkzeuges mit einer Schneidplatte mit vier Schneiden gemäß einem Ausführungsbeispiel der Erfindung;
- Fig. 2 eine vergrößert und abgebrochen dargestellte perspektivische Ansicht des vorderen Endbereiches des Fräswerkzeuges von Fig. 1, wobei die Schneidplatte vom Sitz des Halters abgehoben gezeigt ist;
- Fig. 3 eine gegenüber Fig. 2 in kleinerem Maßstab gezeichnete Draufsicht des Sitzes des Halters des Fräswerkzeuges;
- Fig. 4 eine Ansicht der Schneidplatte des Ausführungsbeispieles, gesehen auf die den Kupplungsteil bildende Seite der Schneidplatte;
- Fig. 5 einen Schnitt entsprechend der Schnittlinie V-V von Fig. 3;
- Fig. 6 eine der Fig. 2 ähnliche perspektivische Ansicht eines zweiten Ausführungsbeispieles der Erfindung;
- Fig. 7 eine Ansicht der Schneidplatte des Ausführungsbeispieles von Fig. 6, gesehen auf die den Kupplungsteil bildende Seite der Schneidplatte, und
- Fig. 8 einen der Fig. 5 ähnlichen Schnitt des zweiten Ausführungsbeispieles von Fig. 6 und 7.

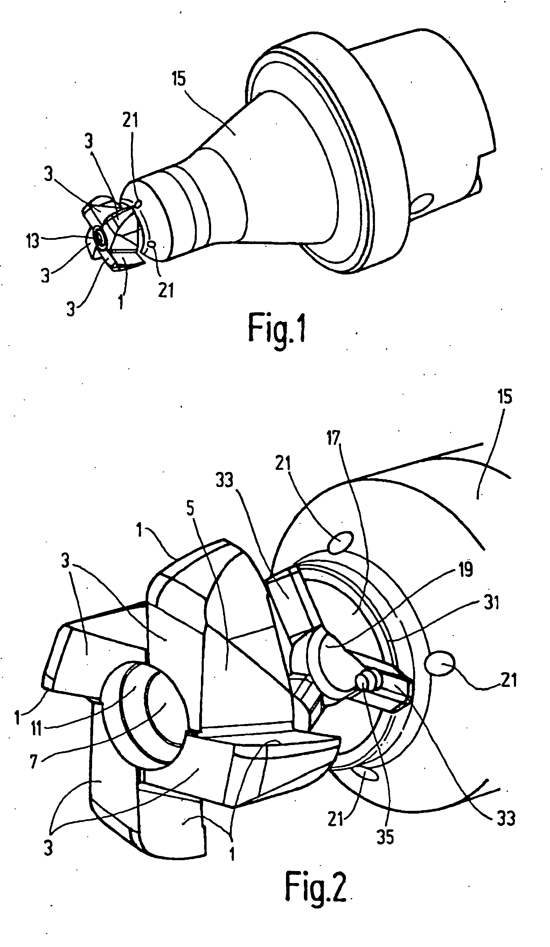

Bei dem in den Fig. 1 bis 5 dargestellten Ausführungsbeispiel, das ein rotierendes Fräswerkzeug mit einer Bearbeitungs-Drehachse 9 betrifft, weist die Schneidplatte vier Schneiden 1 auf, die an vom Körper 5 der Schneidplatte radial vorstehenden Teilen 3 vorgesehen und um je 90 Winkelgrad zueinander versetzt sind. Der Körper 5 der Schneidplatte weist eine zentrale Bohrung 7 auf, die zur Bearbeitungs-Drehachse 9 konzentrisch ist und einen Bohrungsabschnitt in Form einer sich nach außen erweiternden Kegelfläche 11 (Fig. 2) aufweist. Mittels einer nur in Fig. 1 gezeigten Befestigungsschraube 13, die einen zur Kegelfläche 11 passenden Konusabschnitt aufweist, ist die Schneidplatte stirnseitig an einen fräserschaftartigen Halter 15 anschraubbar. Der Halter 15 weist an seiner Stirnseite einen Sitz 17 für die Schneidplatte auf, in dessen Zentrum eine zur Bearbeitungs-Drehachse 9 konzentrische Bohrung 19 mit Innengewinde für die Befestigungsschraube 13 vorgesehen ist. Im Inneren weist der Schaft des Halters 15 Strömungskanäle für die Zufuhr von Kühl/Schmier-Stoffen auf, die über längs des Umfanges des Sitzes 17 verteilte Mündungen 21 austreten.

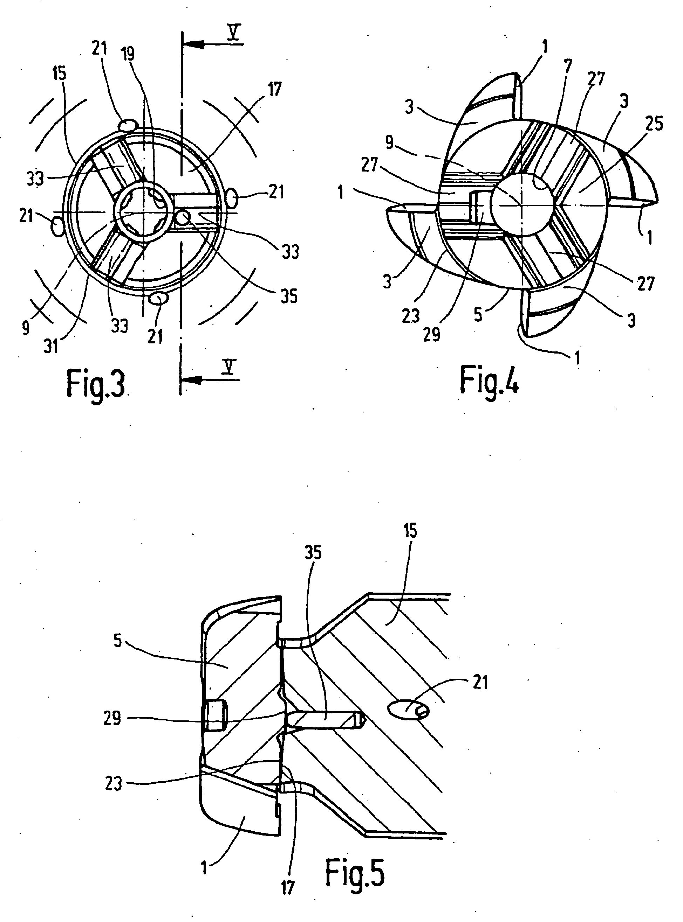

Wie am besten aus Fig. 4 zu ersehen ist, bildet der Körper 5 der Schneidplatte auf der für die Anbringung am Sitz 17 des Halters 15 vorgesehenen Seite einen Kupplungsteil 23 mit einer kreisrunden Planfläche 25, die zur Drehachse 9 normal verläuft. Aus der Ebene der Planfläche 25 axial vorstehend erstrecken sich drei, gleiche Zentriwinkel miteinander einschließende Rippen 27, die in Radialrichtung von der Bohrung 7 bis zum Umfang der Planfläche 25 verlaufen. Jede Rippe 27 bildet an einer ihrer Seitenflanken eine Mitnehmerfläche für die Übertragung eines AntriebsDrehmomentes vom Halter 15 auf die Schneidplatte. Eine der Rippen 27, beim dargestellten Beispiel ist dies die in Fig. 4 linksseitig gelegene Rippe 27, weist an ihrer Oberseite eine Abflachung 29 auf, so dass an der Oberseite dieser Rippe 27 eine Vertiefung gebildet wird, die an die Bohrung 7 angrenzt. Die durch die Abflachung 29 gebildete Vertiefung bildet einen Formteil, der in Zusammenwirkung mit einer korrespondierenden Ausgestaltung, die am Sitz 17 des Halters 15 vorgesehen ist, eine Unverwechselbarkeitseinrichtung bildet.

Wie den Fig. 2 und 3 zu entnehmen ist, ist am Umfang des Sitzes 17 des Halters 15 eine axial leicht vorstehende, rippenartige Ringfläche 31 vorgesehen. Wenn die Schneidplatte am Sitz 17 des Halters 15 angebracht ist, befindet sich die Planfläche 25 der Schneidplatte in einem geringen Abstand von der Ringfläche 31. Wie am besten aus Fig. 2 zu entnehmen ist, sind in die Stirnfläche des Sitzes 17 Nuten 33 eingearbeitet, die zu den Rippen 27 am Kupplungsteil 23 der Schneidplatte komplementär sind und diese Rippen aufnehmen, wenn die Schneidplatte durch die Schraube 13 an den Halter 15 angedrückt wird. Dabei erfolgt die Abstützung der Schneidplatte und die Drehmomentübertragung durch Anlage der Flanken der Rippen 27 an zugeordneten Wandbereichen der Nuten 33, wobei, wie bereits erwähnt, ein geringes Spiel zwischen der umfänglichen Ringfläche 31 und der Planfläche 25 der Schneidplatte verbleibt.

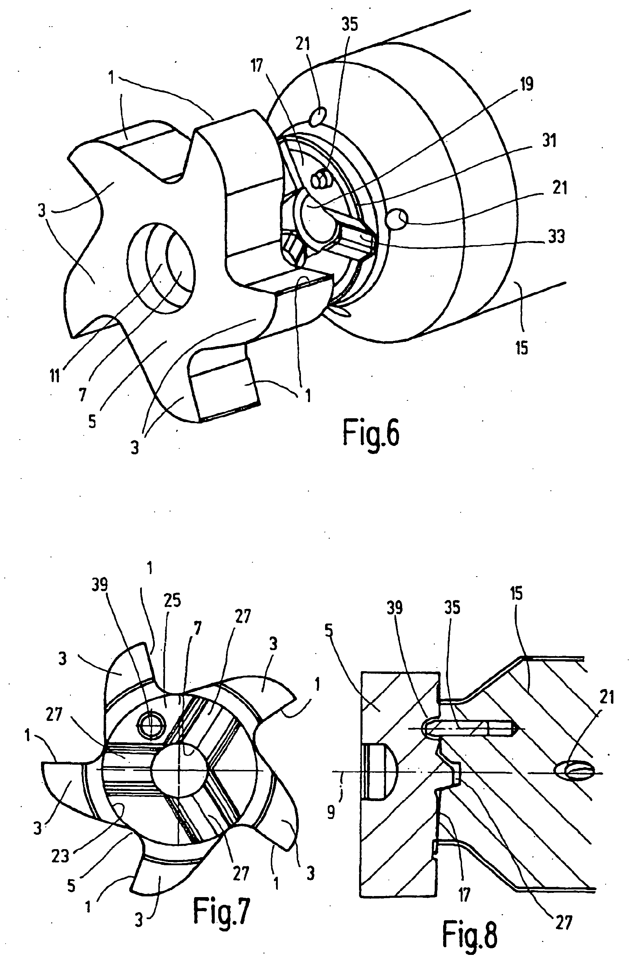

Aus Fig. 2 und 3 ist ersichtlich, dass in einer der Nuten 33, in Fig. 3 ist dies die rechts gelegene Nut 33, ein Stift 35 vom Grund der Nut 33 axial vorspringt. Wie Fig. 5 zeigt, erstreckt sich der Stift 35 in die durch die Abflachung 29 der zugeordneten Rippe 27 gebildete Vertiefung im Körper 5 der Schneidplatte, wenn diese am Sitz 17 des Halters angebracht ist. Dabei sind die axial gemessene Höhe des Stiftes 35 und die Tiefe der durch die Abflachung 29 der Rippe 27 gebildeten Vertiefung so bemessen, dass der Stift 35 mit einem geringen Spiel vor der Abflachung 29 endigt, das Ende des Stiftes 35 also keinen Teil der Anlagefläche zwischen Körper 5 der Schneidplatte und Sitz 17 des Halters 15 bildet. Die gegenseitige örtliche und dimensionsmäßige Zuordnung der die Unverwechselbarkeitseinrichtung bildenden Komponenten an Schneidplatte und Halter, nämlich des durch die Abflachung 29 gebildeten Formteils an der Schneidplatte und der Ausgestaltung des Sitzes 17 des Halters 15 mit einem auf die Abflachung 29 ausgerichteten, vorspringenden Stift 35, bildet eine zwangsmäßige Sicherung gegen das Anbringen einer "falschen" Schneidplatte an einem Halter, der nur für die Benutzung spezieller Schneidplatten vorgesehen und ausgelegt ist.

Es versteht sich, dass anstelle der gezeigten Abflachung 29 und des vorspringenden Stiftes 35 andere Formteile an der Schneidplatte bzw. Ausgestaltungen am Sitz des Halters vorgesehen sein könnten, die die gewünschte Wirkung der Unverwechselbarkeit erbringen.

Die Fig. 6 bis 8 zeigen ein zweites Ausführungsbeispiel mit abgewandelter Gestaltung der Unverwechselbarkeitseinrichtung. Wie beim ersten Ausführungsbeispiel ist als dem Halter 15 zugeordneter Teil der Unverwechselbarkeitseinrichtung ein am Sitz 17 des Halters 15 axial vorspringender Stift 35 vorgesehen. Im Unterschied zum erstbeschriebenen Beispiel erstreckt.sich der Stift 35 jedoch nicht vom Grund einer der Nuten 33, sondern befindet sich am Sitz 17 im Bereich zwischen zwei Nuten 33. In Entsprechung hierzu ist die für die Aufnahme des Stiftes 35 am Körper 5 der Schneidplatte vorgesehene Vertiefung nicht als Abflachung einer Rippe 27, sondern als eine zwischen zwei Rippen 27 am Kupplungsteil 23 befindliche Sackbohrung 39 ausgebildet.

Wie aus Fig. 8 entnehmbar ist, sind der Stift 35 und die Sackbohrung 39 sowohl hinsichtlich ihrer axialen Ausdehnung als auch ihrer Dicke bzw. Weite so dimensioniert, dass sich zwischen den Oberflächen des Stiftes 35 und der Innenseite der Sackbohrung 39 allseits ein Spiel befindet. Wie Fig. 8 zeigt, greift daher der Stift 35 in die Sackbohrung 39 ein, ohne den Körper 5 der Schneidplatte zu berühren.

Vorstehend ist die Erfindung am Beispiel rotierender Fräswerkzeuge beschrieben. Es ist ersichtlich, dass die Erfindung gleichermaßen mit einem nicht rotierenden Werkzeug verwirklichbar ist, beispielsweise einem Werkzeug mit einer an der Schneidplatte befindlichen Schneide für Innenbearbeitung eines rotierenden Werkstückes.

## Patentansprüche

1. Schneidplatte für ein Bearbeitungswerkzeug, insbesondere Fräswerkzeug, die zumindest eine Schneide (1) aufweist, die an einem zentralen Körper (5) der Schneidplatte radial vorstehend ausgebildet ist, welcher für das Anbringen der Schneidplatte an einem stirnseitigen Sitz (17) eines eine Längsachse (9) definierenden, schaftartigen Halters (15) einen Kupplungsteil (23) aufweist, der mindestens eine Mitnehmerfläche für die Übertragung eines Arbeitsdrehmoments vom Halter (15) auf die Schneidplatte bildet, und mit einer zur Längsachse (9) konzentrischen Bohrung (7), die im Körper (5) für eine die Schneidplatte am Sitz (17) des Halters (15) axial sichernde Schraube (13) ausgebildet ist, wobei der Kupplungsteil (23) zumindest drei am Körper (5) axial vorstehende Mitnehmerteile (27) in Form von Rippen aufweist, an denen die Mitnehmerfläche für die Drehmomentübertragung ausgebildet ist und die sich, gleiche Zentriwinkel miteinander einschließend, radial erstrecken und für die Zusammenwirkung mit komplementär ausgebildeten Nuten (33) des Sitzes (17) des Halters (15) vorgesehen sind, wobei die Schneidplatte einen Formteil (29) aufweist, der in Zusammenwirkung mit einer zugeordneten Ausgestaltung (35) am Sitz (17) des Halters (15) eine Unverwechselbarkeitseinrichtung bildet, **dadurch gekennzeichnet, dass** als Formteil der Unverwechselbarkeitseinrichtung eine sich am Kupplungsteil (23) in Axialrichtung erstreckende Vertiefung (29, 39) oder eine durch eine Abflachung (29) einer der Rippen (27) gebildete Vertiefung oder eine am Kupplungsteil (23) zwischen zwei Rippen (27) gelegene, sich in Axialrichtung erstreckende Vertiefung (39) vorgesehen ist.

2. Halter für eine Schneidplatte, die die Merkmale des Patentanspruches 1 aufweist, wobei der Halter zumindest drei zu den Rippen der Schneidplatte komplementär ausgebildete Nuten (33) hat und wobei eine am Sitz (17) für die Schneidplatte vorgesehene Ausgestaltung (35) in Zusammenwirkung mit einem Formteil (29) am Körper (5) der Schneidplatte eine Unverwechselbarkeitseinrichtung bildet, **dadurch gekennzeichnet, dass** als einen Teil der Unverwechselbarkeitseinrichtung bildende Ausgestaltung ein am Sitz (17) für die Schneidplatte axial vorstehender Vorsprung (35) vorgesehen ist, der sich in die am Kupplungsteil (23) der Schneidplatte ausgebildete Vertiefung (29,39) erstreckt oder dass als einen Teil der Unverwechselbarkeitseinrichtung bildender Vorsprung ein Stift (35) vorgesehen ist, der sich, zur Längsachse (9) parallel, vom Sitz (17) des Halters (15) axial erstreckt.

3. Halter nach Anspruch 2, **dadurch gekennzeichnet, dass** die axiale Höhe des Vorsprunges (35) etwas kleiner ist als die Tiefe der Vertiefung (29,39) am Kupplungsteil (23) der Schneidplatte.

4. Halter nach Anspruch 2 oder 3, **dadurch gekennzeichnet, dass** der Stift (35) hinsichtlich seiner axialen Länge und seiner Dicke kleiner dimensioniert ist als die zugeordnete Vertiefung (39), so dass er in dieser ohne Berührung mit dem Körper (5) der Schneidplatte aufnehmbar ist.

## Claims

1. Knife plate for a processing tool, in particular a milling tool, comprising at least one knife (1) formed on a central body (5) of the knife plate and radially projecting from the same, comprising a coupling part (23) for fitting the knife plate to a facing side seat (17) of a shaft-like holder (15) defining a longitudinal axis (9), the same forming at least one follower surface for the transmission of a working torque from the holder (15) to the knife plate, and with a bore (7) concentric with the longitudinal axis (9), the same being formed in the body (5) for receiving a screw (13) axially securing the knife plate to the seat (17) of the holder (15), whereby the coupling part (23) comprises at least three follower parts (27) in the form of ribs axially projecting from the body (5), on which the follower surface for the torque transmission is formed, and which radially extend whilst enclosing identical central angles with each other, and being envisaged for the co-operation with complimentary grooves (33) of the seat (17) of the holder (15), whereby the knife plate comprises a shaped part (29) forming a non-interchangeable means in co-operation with an associated design (35) on the seat (17) of the holder (15), **characterised in that** a recess (29, 39) extending in an axial direction on the coupling part (23) as a shaped part of the non-interchangeable or a recess formed by means of a flattening (29) of the ribs, or a recess (39) extending in an axial direction in the coupling part (23) between two ribs (27) is envisaged.

2. Holder for a knife plate, with the characteristics of Claim 1, whereby the holder comprises at least three grooves (33) formed complimentary to the ribs of the knife plate, and whereby a design (35) envisaged on the seat (17) of the knife plate forms a non-interchangeable means on the body (5) of the knife plate in co-operation with a shaped part (29), **characterised in that** an axially projecting projection (35) is envisaged on the seat (17) of the knife plate as a design forming a part of the non-interchangeable means, the same extending into the recess (29, 39) formed on the coupling part (23) of the knife plate, or **in that** a pin (35) forming a part of the projection is envisaged as the non-interchangeable means, the same axially extending parallel to the longitudinal axis (9) from the seat (17) of the holder (15).

3. Holder according to Claim 2, **characterised in that** the axial height of the projection (35) is somewhat smaller than the depth of the recess (29, 39) in the coupling part (23) of the knife plate.

4. Holder according to Claim 2 or 3, **characterised in that** the pin (35) is of a smaller dimension with regard to its axial length and its thickness than the associated recess (39), so that the same can be received into the latter without contacting the body (5) of the knife plate.

## Revendications

1. Outil de coupe pour un outil d'usinage, en particulier un outil de fraisage, qui a au moins une lame (1) qui est constituée, d'une façon saillante dans le sens radial, sur un corps (5) central de l'outil de coupe qui présente, pour la pose de l'outil de coupe sur un siège (17), côté frontal, d'un élément de retenue (15) de type manche définissant un axe longitudinal (9), une partie d'accouplement (23) qui forme au moins une surface d'entraînement pour la transmission à l'outil de coupe d'un couple de travail de l'élément de retenue (15), et ayant un alésage (7), concentrique à l'axe longitudinal (9), qui est constitué dans le corps (5) pour une vis (13) bloquant axialement l'outil de coupe sur le siège (17) de l'élément de retenue (15), la partie d'accouplement (23) présentant au moins trois pièces d'entraînement (27), faisant saillie axialement sur le corps (5), sous forme de nervures, sur lesquelles la surface d'entraînement est constituée pour la transmission du couple et qui s'étendent dans le sens radial, en faisant entre elles des angles au centre identiques, et qui sont prévues pour la coopération avec des rainures (33), constituées de façon complémentaire, du siège (17) de l'élément de retenue (15), l'outil de coupe ayant une pièce usinée (29) qui, en coopération avec une configuration (35) associée sur le siège (17) de l'élément de retenue (15), forme un équipement détrompeur, **caractérisé en ce que**, en tant que pièce usinée de l'équipement détrompeur, il est prévu un creux (29, 39) s'étendant dans le sens axial sur la partie d'accouplement (23) ou un creux formé par un aplatissement (29) d'une des nervures (27), ou un creux (39) s'étendant dans le sens axial et placé sur la partie d'accouplement (23) entre deux nervures (27).

2. Elément de retenue pour un outil de coupe, qui présente les caractéristiques de la revendication 1, l'élément de retenue ayant au moins trois rainures (33) constituées de façon complémentaire par rapport aux nervures de l'outil de coupe, et une configuration (35) prévue sur le siège (17) pour l'outil de coupe formant, en coopération avec une pièce usinée (29) sur le corps (5) de l'outil de coupe, un équipement détrompeur, **caractérisé en ce que**, en tant que configuration formant une partie de l'équipement détrompeur, il est prévu une saillie (35) faisant saillie axialement sur le siège (17) pour l'outil de coupe, saillie qui s'étend dans le creux (29, 39) constitué sur la partie d'accouplement (23) de l'outil de coupe, ou **en ce que**, en tant que saillie formant une partie de l'équipement détrompeur, il est prévu une broche (35) qui s'étend axialement depuis le siège (17) de l'élément de retenue (15), parallèlement à l'axe longitudinal (9).

3. Elément de retenue selon la revendication 2, **caractérisé en ce que** la hauteur axiale de la saillie (35) est légèrement plus petite que la profondeur du creux (29, 39) sur la partie d'accouplement (23) de l'outil de coupe.

4. Elément de retenue selon la revendication 2 ou 3, **caractérisé en ce que** la broche (35), en ce qui concerne sa longueur axiale et son épaisseur, est dimensionnée plus petite que le creux (39) affecté, de sorte qu'elle peut être logée dans ce dernier sans contact avec le corps (5) de l'outil de coupe.
